# EUROPÄISCHE PATENTSCHRIFT

(11) **EP 0 945 289 B1**
(45) Veröffentlichungstag und Bekanntmachung des Hinweises auf die Patenterteilung: **08.05.2002**
(21) Anmeldenummer: 99112396.9
(22) Anmeldetag: 31.05.1996
(51) Int. Cl.: B60G 21/055, B60G 9/02

(54) **Achsaufhängung für Starrachsen in Fahrzeugen**
Axle suspension for rigid vehicle axles
Système de suspension d'essieu destiné aux essieux rigides de véhicules

(30) Priorität: 16.06.1995 DE 19521875
(43) Veröffentlichungstag der Anmeldung: 29.09.1999
(62) Teilanmeldung aus: 96917485.3
(73) Patentinhaber: ZF Lemförder Metallwaren AG, 49448 Lemförde (DE)
(72) Erfinder: Buhl, Reinhard, 49163 Bohmte (DE)

(56) Entgegenhaltungen:
- DE-A- 3 119 810
- DE-A- 4 021 157
- DE-A- 4 338 651
- DE-C- 928 813
- DE-C- 3 737 735
- DE-C- 4 307 639
- US-A- 4 632 422
- US-A- 4 725 074
- PATENT ABSTRACTS OF JAPAN vol. 016, no. 576 (M-1345), 16. Dezember 1992 (1992-12-16) & JP 04 224413 A (NISSAN MOTOR CO LTD), 13. August 1992 (1992-08-13)

## Beschreibung

Die Erfindung bezieht sich auf eine Achsaufhängung für Starrachsen in Fahrzeugen, insbesondere Nutzkraftfahrzeugen, nach dem Oberbegriff des Patentanspruches 1.

Bekannt sind Achsaufhängungen aus einer Achsführung durch an beiden Fahrzeugseiten angeordnete Längslenker, die einerseits an der Fahrzeugachse und andererseits an dem Fahrzeugaufbau angelenkt sind, in Verbindung mit einem einerseits in der Fahrzeugmitte mit einem Zentralgelenk meistens an der Fahrzeugachse verankerten und mit den Enden seiner beiden Streben andererseits am Fahrzeugaufbau angelenkten Dreieckslenker und aus einem in der Draufsicht meist u-förmigen Stabilisatorstab, dessen abgewinkelte Schenkelenden mit einem seitlichen Abstand voneinander an den Fahrzeugaufbauten begrenzt universalgelenkig befestigt sind und dessen Stegteil in wenigstens zwei Stabilisatorlagern an der Fahrzeugachse um eine Querachse zur Fahrzeuglängsrichtung beweglich gelagert ist.

Aus der DE 43 38 651 A1 ist eine Aufhängung für eine Starrachse eines Fahrzeuges mit einem Achskörper mit auf jeder Radseite einem Paar übereinanderliegender jeweils mit dem Fahrzeugoberbau gelenkig verbundener seitlicher Lenkerpaare, einer Querführung, einem Seitenneigungsstabilisator sowie einer Schrauben- oder Luftfeder-Abstützung gegenüber dem Fahrzeugoberbau bekannt, bei der die Funktion der Querführung in ein Lenkerdreieck gelegt ist, wozu aus den beiden Lenkerpaaren mit jeweils einem oberen und einem unteren Lenker, von denen jeweils einer längs und einer schräg zur Fahrzeuglängsachse verläuft, jeweils ein Schräg-Lenker Bestandteil eines solchen Lenkerdreieckes ist, und daß der Seitenneigungsstabilisator eine - in gleicher Höhe quer gegenüberliegende Schräg- bzw. Längs-Lenker in einem ihrer jeweiligen Lagerbereiche starr miteinander verbindende -Torsionsfeder ist.

Aus US 4 632 422 ist eine Starachs aufhängung bekannt in der die Verbindung mit einem polygonalen Querschnittsprofil am Ende des Stabilisatorstabes in eine komplementäre Ausnehmung des Längslenkers nur Bewegungen in der Längsrichtung des Stabilisatorstabes zuläßt.

Weiterhin ist aus DE 40 21 157 A1 eine Einzelradaufhängung für Kraftfahrzeuge mit einander gegenüberliegenden radführenden Lenkern, mit schräg zur Fahrzeuglängsachse verlaufenden, aufbauseitigen Schwenkachsen sowie mit einem quer zur Fahrzeuglängsachse freihängend angeordneten Drehstabstabilisator bekannt, dessen beiden Enden, vorzugsweise unter Zwischenschaltung gummielastischer Elemente, derart an die radführenden Lenker angekoppelt sind, daß der Drehstabstabilisator bei nicht gleichsinnigem und nicht gleichgroßem Ein- bzw. Ausfedern der Räder um seine Längsachse tordiert wird, wobei der Drehstabstabilisator schenkellos, d. h. ohne abgewinkelte Arme, ausgebildet ist, seine beiden Enden mit den ihnen benachbarten radführenden Lenkern jeweils über nur eine Lageranordnung gekoppelt sind, und die Lageranordnungen als winkelausgleichende und drehmomentenübertragende Lager ausgebildet sind.

Der Erfindung liegt die Aufgabe einer einfacheren, raum- und kostensparenden Gestaltung einer Achsaufhängung zugrunde.

Gelöst wird diese Aufgabe bei einer Achsführung nach dem Oberbegriff durch Ausbildungsmerkmale nach dem Patentanspruch 1.

Erreicht wird durch diese Ausbildungsmerkmale eine Integration der Elemente zur Achsführung und der Elemente zur Querstabilisierung des Fahrzeugaufbaus gegenüber der Fahrzeugachse. Der Stabilisatorstab ist unmittelbar zwischen den Längslenkern für die Achsführung angeordnet und mit diesen Längslenkern drehfest, quer zur Fahrzeuglängsrichtung jedoch kardanisch beweglich, verbunden.

Gesonderter Bauraum für die Lagerung eines Stabilisatorstabes ist nicht mehr erforderlich. Es entfallen Lagerelemente für den Stabilisatorstab an der Fahrzeugachse und auch an dem Fahrzeugaufbau. Damit einhergehend ist die erfindungsgemäße Achsaufhängung gegenüber bekannten Ausbildungen kostensparend, weil sie weniger Einzelteile aufweist und weniger Montagearbeit erfordert. Es ergeben sich aber auch Funktionsvorteile. Der Stabilisatorstab kann als gerader Stab zum Einsatz kommen, so daß sich auch seine Herstellung verbilligt. Die Anordnung des Stabilisatorstabes zwischen den Längslenkern für die Achsführung kann an beliebiger Stelle zwischen den Anlenkungen der Längslenker an der Fahrzeugachse und den Anlenkungen der Längslenker am Fahrzeugaufbau erfolgen. Möglich ist aber auch eine Kombination der Verbindung des Stabilisatorstabes mit den Längslenkern für die Achsführung mit deren Lagern an der Fahrzeugachse.

In der Zeichnung sind eine nicht erfindungsgemäße Achsaufhängung und ein Ausführungsbeispiel der Erfindung teils schematisch dargestellt. Es zeigen:
- Figur 1: eine Draufsicht auf eine nicht erfindungsgemäße Achsaufhängung,
- Figur 2: eine Seitenansicht der Anordnung nach Figur 1,
- Figur 3: eine Draufsicht auf ein Ausführungsbeispiel der Erfindung und
- Figur 4: eine Seitenansicht der Anordnung nach Figur 3.

Bei den in der Zeichnung dargestellten Ausführungsbeispielen ist die Fahrzeugachse 1 an beiden Fahrzeugseiten mit einem erheblichen Abstand von der Längsmitte des Fahrzeuges durch Längslenker 2 und 3 und in der Fahrzeugmitte durch einen in der Höhenlage versetzt angeordneten Dreieckslenker 4 mit dem in der Zeichnung aus Gründen der besseren Übersicht nicht dargestellten Fahrzeugaufbau verbunden. Die Gelenkverbindungen der Längslenker 2 und 3 einerseits mit der Starrachse 1 und andererseits mit dem Fahrzeugaufbau sowie die Anlenkungen der freien Enden der beiden Streben des Dreieckslenkers 4 sind kardanisch ausgeführt, um Verwindungen der Fahrzeugachse 1 gegenüber dem Fahrzeugaufbau zu ermöglichen. Der Dreieckslenker 4 ist mit dem Zentralgelenk 5 mittig auf der Fahrzeugachse 1 verankert.

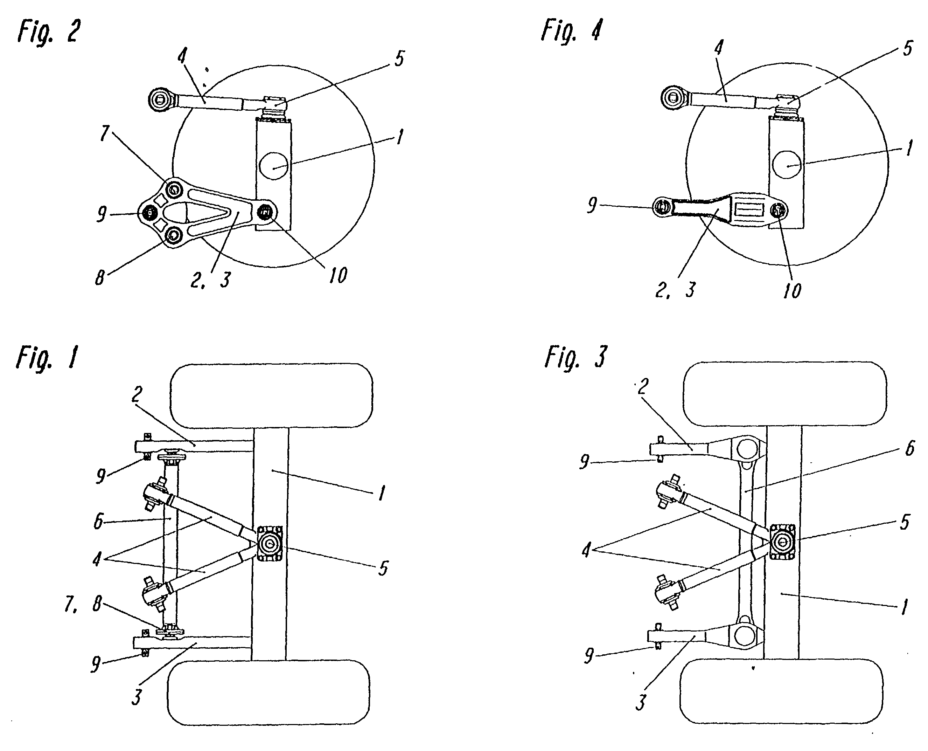

Bei der nicht erfindungsgemäßen Achsaufhängung in den Figuren 1 und 2 ist ein Stabilisatorstab 6 zwischen den Längslenkern 2 und 3 angeordnet und mit seinen Enden jeweils mit einem der beiden Längslenker 2 und 3 drehfest, jedoch in Längsrichtung des Fahrzeugs begrenzt beweglich, verbunden. Erreicht wird dies bei der Anordnung nach dem Beispiel in den Figuren 1 und 2 durch eine Anbindung des Stabilisatorstabendes an den Längslenker an zwei einen Abstand voneinander aufweisenden Stellen 7 und 8, wobei diese Anbindung kardanisch beweglich ist, um Ausgleichsbewegungen zu ermöglichen. Dargestellt ist in diesem Beispiel die Anordnung des Stabilisatorstabes 6 und seine Verbindung mit den Längslenkern 2 und 3 in Nähe der Anlenkung 9 der beiden Längslenker 2 und 3 an dem nicht dargestellten Fahrzeugaufbau.

Das Ausführungsbeispiel der Erfindung in den Figuren 3 und 4 zeigt eine Achsaufhängung, bei der der Stabilisatorstab 6 in Nähe der Anlenkungen 10 der anderen Enden der Längslenker 2 und 3 an die Fahrzeugachse 1 angeordnet ist. Bei diesem Ausführungsbeispiel greifen die Enden des Stabilisatorstabes 6 mit einem polygonalen Querschnittsprofil in eine komplementäre Ausnehmung der Längslenker 2 und 3 kardanisch beweglich ein, so daß andererseits aber eine drehfeste Verbindung hergestellt wird.

### BEZUGSZEICHENLISTE:

- 1: Fahrzeugachse
- 2: Längslenker
- 3: Längslenker
- 4: Dreieckslenker
- 5: Zentralgelenk
- 6: Stabilisatorstab
- 7: Befestigungspunkt
- 8: Befestigungspunkt
- 9: Gelenk
- 10: Gelenk

## Patentansprüche

1. Achsaufhängung für Starrachsen in Fahrzeugen, insbesondere Nutzfahrzeugen, bei der auf jeder Fahrzeugseite etwa auf gleicher Höhe wenigstens ein sich in Fahrzeuglängsrichtung erstreckender, die Fahrzeugachse (1) mit dem Fahrzeugaufbau vertikal beweglich verbindender Längslenker (2, 3) und davon in der Höhe abweichend ein einerseits mittig an der Fahrzeugachse und andererseits seitlich versetzt an dem Fahrzeugaufbau angelenkter Dreieckslenker (4) sowie ein Stabilisatorstab (6) als ein seitlichen Kippbewegungen durch Torsionsspannungen entgegenwirkender Drehfederstab vorgesehen sind, wobei der Stabilisatorstab (6) unmittelbar zwischen den Längslenkern (2,3) angeordnet ist und seine Enden universalgelenkig, jedoch drehfest, mit den Längslenkern (2,3) verbunden sind,
**dadurch gekennzeichnet, daß**
die Enden des Stabilisatorstabes (6) ein polygonales Querschnittsprofil aufweisen, das zur Verbindung der Enden des Stabilisatorstabes (6) mit den Längslenkern (2 bzw. 3) in eine komplementäre Ausnehmung der Längslenker drehfest, aber kardanisch beweglich eingreift.

2. Achsaufhängung nach Anspruch 1,
**dadurch gekennzeichnet, daß**
die Enden des Stabilisatorstabes (6) in der Nähe je einer Anlenkung (10) der Längslenker (2 und 3) an der Fahrzeugachse (1) mit den Längslenkern verbunden sind.

## Claims

1. Axle suspension for rigid axles in vehicles, in particular commercial vehicles, in which at least one longitudinal control arm (2, 3), which extends in the longitudinal direction of the vehicle and connects the vehicle axle (1) to the vehicle body in a vertically mobile manner, and, vertically staggered therefrom, a wishbone (4), which is articulated to the vehicle axle centrally on one side and to the vehicle body in a laterally staggered manner on the other side, as well as a stabilizer bar (6) as a torsion bar opposing lateral tilting movements due to torsional stresses are provided on each side of the vehicle approximately at the same height, wherein the stabilizer bar (6) is disposed directly between the longitudinal control arms (2, 3) and its ends are connected to the longitudinal control arms (2, 3) by way of universal joints, yet in a non-rotatable manner,
**characterised in that**
the ends of the stabilizer bar (6) have a polygonal cross-sectional profile which, in order to connect the ends of the stabilizer bar (6) to the longitudinal control arms (2 and 3, respectively), engages in a complementary recess in the longitudinal control arms so as to be non-rotatable, yet mobile like a Cardan joint.

2. Axle suspension according to Claim 1,
**characterised in that**
the ends of the stabilizer bar (6) are connected to the longitudinal control arms in the vicinity of a respective articulation point (10) of the longitudinal control arms (2 and 3) at the vehicle axle (1).

## Revendications

1. Suspension d'essieu pour essieux rigides de véhicules, en particulier véhicules utilitaires, dans laquelle sont prévus sur chaque côté du véhicule, à peu près à même hauteur, au moins un bras oscillant longitudinal (2, 3) s'étendant dans la direction longitudinale du véhicule et reliant, de manière mobile verticalement, l'essieu (1) du véhicule à sa carrosserie, et, à une hauteur différente, un bras oscillant triangulaire (4) articulé d'une part au milieu de l'essieu du véhicule et d'autre part décalé sur le côté de la carrosserie du véhicule, ainsi qu'une barre de stabilisation (6) servant de barre de torsion qui s'oppose à des mouvements de basculement latéraux par des contraintes de torsion, la barre de stabilisation (6) étant disposée directement entre les bras oscillants longitudinaux (2, 3) et ses extrémités étant reliées, à la façon d'une articulation universelle mais solidairement en rotation, aux bras oscillants longitudinaux (2, 3), **caractérisée en ce que** les extrémités de la barre de stabilisation (6) présentent un profil de section polygonale qui, pour la liaison des extrémités de la barre de stabilisation (6) avec les bras oscillants longitudinaux (respectivement 2 et 3), s'engage dans un évidement complémentaire des bras oscillants longitudinaux, de manière solidaire en rotation, mais mobile à la manière d'un joint de cardan.

2. Suspension d'essieu selon la revendication 1, **caractérisée en ce que** les extrémités de la barre de stabilisation (6) sont reliées aux bras oscillants longitudinaux, à proximité chacune d'une articulation (10) des bras oscillants longitudinaux (2 et 3) sur l'essieu (1) du véhicule.
